# DEMANDE DE BREVET EUROPEEN

(11) **EP 1 445 578 A1**
(43) Date de publication de la demande: **11.08.2004**
(21) Numéro de dépôt: 03293233.7
(22) Date de dépôt: 19.12.2003
(51) Int. Cl.: G01C 1/00, G01C 21/02, H04B 7/185

(54) **Dispositif perfectionné de mesures astrométriques à deux téléscopes, dont un astrométrique**

(30) Priorité: 31.01.2003 FR 0301104
(71) Demandeur: ALCATEL, 75008 Paris (FR)
(72) Inventeur: Singer, Christian, 06400 Cannes (FR)
(74) Mandataire: Hedarchet, Stéphane

(57) **Abrégé**

Un dispositif de mesures astrométriques comprend i) un premier télescope astrométrique (1) comportant une première (L1) et une seconde (L2) lignes de visée correspondant respectivement à des premier et second champs de vue et des premiers moyens optiques (4) chargés de combiner des premier et second faisceaux de lumière, issus d'étoiles situées dans les premier et second champs de vue et sensiblement parallèles aux première (L1) et seconde (L2) lignes de visée, et de les délivrer au niveau d'un premier dispositif de détection d'étoiles (5) installé au niveau d'un premier plan focal (PF1), ii) un second télescope (2) comportant une troisième ligne de visée (L3) sensiblement parallèle à l'une des première (L1) et seconde (L2) lignes de visée et des second moyens optiques (6) chargés de collecter un troisième faisceau de lumière issu desdites étoiles et sensiblement parallèle à la troisième ligne de visée (L3) et de le délivrer au niveau d'un second dispositif de détection d'étoiles (7) installé au niveau d'au moins un second plan focal (PF2), et iii) des moyens de traitement (3) chargés de déterminer le champ de vue d'origine de chaque étoile détectée en fonction de sa détection soit seulement par le premier dispositif de détection (5), soit conjointement par les premier (5) et second (7) dispositifs de détection.

## Description

L'invention concerne le domaine des dispositifs optiques, et plus particulièrement celui des dispositifs optiques de mesures astrométriques.

L'astrométrie est une technique bien connue consistant à observer simultanément, à l'aide de deux lignes de visée, deux « champs de vue » contenant des étoiles, puis à déterminer les positions de ces étoiles au sein de chaque champ de vue, et finalement à mesurer les positions réelles des étoiles par confrontation de leurs positions au sein de leurs champs de vue respectifs. L'obtention d'une précision de mesure donnée exige une stabilité au moins équivalente sur chaque ligne de visée.

Pour mettre en oeuvre cette technique, il existe deux solutions bien connues.

Une première solution consiste à utiliser un unique télescope comportant deux lignes de visée définies par un premier miroir, constitué de deux parties séparées angulairement de la moitié de l'angle entre les deux lignes de visée, puis à combiner les deux faisceaux optiques au niveau du premier miroir. Grâce à cette première solution, mise en oeuvre sur le satellite de cartographie du ciel HIPPARCOS, l'exigence de stabilité imposée aux deux lignes de visée se traduit par une exigence de stabilité angulaire uniquement sur les deux parties du premier miroir. Mais, le plan focal étant unique, l'identification du champ de vue dont est issue une étoile observée doit se faire a priori à partir d'un catalogue existant, ce qui est un handicap majeur lorsqu'il s'agit de mesurer les positions de nouvelles étoiles.

Une seconde solution consiste à utiliser deux télescopes comportant chacun une ligne de visée et dont on combine les deux faisceaux au niveau d'un plan focal unique après avoir formé une image intermédiaire au niveau d'un plan focal intermédiaire. En positionnant un masque dans le plan focal intermédiaire de l'un des deux télescopes, il est possible, après avoir combiné les deux faisceaux, d'identifier sur le plan focal unique le champ de vue dont est issue une étoile observée, grâce à un décalage latéral des deux champs égal à une colonne de détection. Cette solution permet de mesurer les positions de nouvelles étoiles, mais, elle impose que la somme des stabilités de chaque élément de chaque télescope soit inférieure à la précision de mesure recherchée, ce qui est particulièrement difficile à obtenir, en particulier lorsque les mesures sont effectuées par des télescopes embarqués sur un satellite en rotation autour d'un astre, tel que la terre.

L'invention a donc pour but d'améliorer la situation.

Elle propose à cet effet un dispositif de mesures astrométriques comprenant un premier télescope astrométrique comportant des première et seconde lignes de visée, correspondant respectivement à des premier et second champs de vue, et des premiers moyens optiques agencés de manière à combiner des premier et second faisceaux de lumière, issus d'étoiles situées dans les premier et second champs de vue et sensiblement parallèles aux première et seconde lignes de visée, et à délivrer ces faisceaux au niveau d'un premier dispositif de détection d'étoiles installé au niveau d'un premier plan focal.

Ce dispositif se caractérise par le fait qu'il comprend également, d'une part, un second télescope comportant une troisième ligne de visée sensiblement parallèle à l'une des première et seconde lignes de visée et des second moyens optiques agencés de manière à collecter un troisième faisceau de lumière, issu des étoiles et sensiblement parallèle à la troisième ligne de visée, et à délivrer ce faisceau au niveau d'un second dispositif de détection d'étoiles installé au niveau d'au moins un second plan focal, et d'autre part, des moyens de traitement agencés pour déterminer le champ de vue d'origine de chaque étoile détectée en fonction de sa détection soit seulement par le premier dispositif de détection, soit conjointement par les premier et second dispositifs de détection.

Dans un premier mode de réalisation, les premiers moyens optiques comprennent un miroir de combinaison et deux miroirs plans d'entrée présentant des normales désorientées entre elles d'un premier angle sensiblement égal à la moitié d'un second angle défini entre les première et seconde lignes de visée et chargés de recevoir respectivement les premier et second faisceaux de lumière et de les réfléchir vers le miroir de combinaison.

Dans un second mode de réalisation, les premiers moyens optiques comprennent un miroir concave d'entrée comportant des première et seconde portions présentant des normales désorientées chacune d'un premier angle, sensiblement égal à un second angle défini entre les première et seconde lignes de visée, et agencés de manière à recevoir respectivement les premiers et second faisceaux de lumière et à les combiner.

Préférentiellement, chaque miroir plan ou portion de miroir concave présente une surface sensiblement égale à une moitié de la surface de la pupille d'entrée du télescope astrométrique.

Egalement de préférence, le second angle est égal à environ 106°.

Par ailleurs, le premier dispositif de détection comprend de préférence une première partie, dédiée à la détection d'étoiles (par exemple réalisée sous la forme d'un « sky mapper ») et couplée aux moyens de traitement, et une seconde partie dédiée aux mesures astrométriques et comprenant par exemple une première sous-partie dédiée aux mesures astrométriques et une seconde sous-partie dédiée aux mesures photométriques en bande large (ou BBP pour « Broad Band Photometry »).

En outre, lorsque le second télescope est de type spectrométrique, le second dispositif de détection comprend de préférence une première partie, dédiée à la détection d'étoiles (par exemple réalisée sous la forme d'un « sky mapper ») et couplée aux moyens de traitement, et une seconde partie dédiée aux mesures spectrométriques et comprenant par exemple une première sous-partie dédiée aux mesures photométriques en bande moyenne (ou MBP pour « Medium Band Photometry ») et une seconde sous-partie dédiée aux mesures spectrométriques de vitesse radiale (ou RVS pour « Radial Velocity Spectrometer »).

De telles première et seconde parties de détection sont préférentiellement constituées de détecteurs à couplage de charge (ou CCD pour « Coupling Charge Device »).

L'invention est particulièrement bien adaptée, bien que de façon non exclusive, aux mesures astrométriques effectuées sur un satellite capable de tourner sur lui-même afin que ses premier et second dispositifs de détection soient balayés selon une loi de balayage choisie.

D'autres caractéristiques et avantages de l'invention apparaîtront à l'examen de la description détaillée ci-après, et des dessins annexés, sur lesquels :
- la figure 1 est un schéma de principe illustrant un exemple de positionnement relatif d'un télescope astrométrique et d'un télescope spectrométrique d'un dispositif de mesures selon l'invention,
- la figure 2 illustre de façon schématique un exemple de réalisation d'un télescope astrométrique d'un dispositif selon l'invention,
- la figure 3 illustre de façon schématique un exemple de réalisation d'un module de détection d'un télescope astrométrique d'un dispositif selon l'invention,
- la figure 4 illustre de façon schématique un exemple de réalisation d'un télescope spectrométrique d'un dispositif selon l'invention, et
- la figure 5 illustre de façon schématique un exemple de réalisation d'un module de détection d'un télescope spectrométrique d'un dispositif selon l'invention.

Les dessins annexés pourront non seulement servir à compléter l'invention, mais aussi contribuer à sa définition, le cas échéant.

L'invention concerne un dispositif de mesures astrométriques permettant de mesurer avec une grande précision (typiquement de l'ordre de 10 micro arcsec) non seulement les positions d'étoiles connues, mais également les positions d'étoiles inconnues. Un tel dispositif est particulièrement bien adapté aux mesures effectuées dans l'espace, notamment à bord d'un satellite de cartographie ou d'un instrument de cartographie embarqué sur un engin spatial.

Dans la description qui suit, on considère, à titre d'exemple illustratif, que le dispositif selon l'invention est implanté sur la structure porteuse d'un satellite de cartographie de type rotatif (ou « spiné »), par exemple en orbite autour d'un astre tel que la terre. Par exemple, la période de précession du satellite autour de la terre est égale à quelques dizaines de jours et l'angle d'inclinaison de l'axe de rotation du satellite par rapport à la direction du soleil est égal à quelques dizaines de degrés.

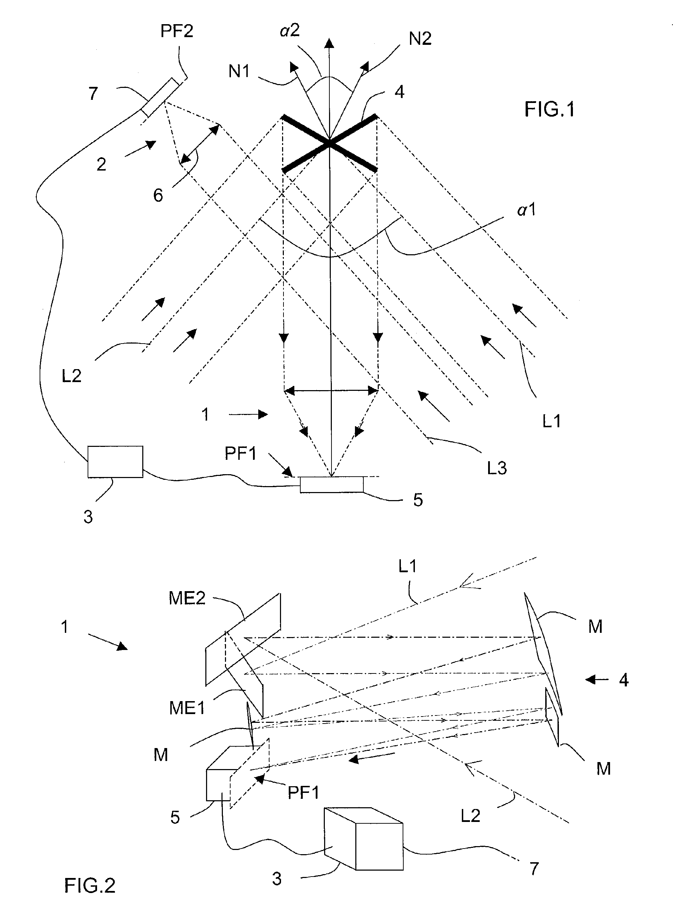

Comme illustré sur le schéma de principe de la figure 1, un dispositif de mesures selon l'invention comprend essentiellement un premier télescope 1, de type astrométrique, et un second télescope 2, par exemple de type spectrométrique, couplés à un module de traitement de données 3. Dans ce qui suit on considère que le second télescope 2 est de type spectrométrique, mais cela n'est pas obligatoire, comme on le verra plus loin.

Plus précisément, le télescope astrométrique 1 est du type dit « à deux lignes de visée », bien connu de l'homme de l'art. Ce télescope astrométrique 1 comprend donc une première L1 et une seconde L2 lignes de visée correspondant respectivement à des premier et second champs de vue dans lesquels se trouvent situées des étoiles à observer.

Le télescope astrométrique 1 comprend en outre un premier module optique 4 (ici matérialisé de façon très simplifiée par deux miroirs et une lentille) chargé de collecter des premier et second faisceaux de lumière, issus d'étoiles situées dans les premier et second champs de vue et se dirigeant sensiblement parallèlement aux première L1 et seconde L2 lignes de visée, et de délivrer ces faisceaux au niveau d'un premier module de détection d'étoiles 5 installé au niveau d'un premier plan focal PF1 et alimentant en données représentatives de positions le module de traitement de données 3.

Ce télescope astrométrique 1 est par exemple installé sur la partie supérieure d'un tore de support de la structure du satellite (non représenté).

Le télescope spectrométrique 2 est du type dit « à une ligne de visée », également bien connu de l'homme de l'art. Ce télescope spectrométrique 2 comprend donc une troisième ligne de visée L3 qui, selon l'invention, est sensiblement parallèle à l'une des première L1 et seconde L2 lignes de visée du télescope astrométrique 1. Dans l'exemple illustré, la troisième ligne de visée L3 est sensiblement parallèle à la première ligne de visée L1, si bien qu'elle correspond également au premier champ de vue.

Le champ de vue du second télescope (spectrométrique) 2 doit être au moins égal au champ de vue du télescope astrométrique 1. Par ailleurs, le second télescope (spectrométrique) 2 doit être capable de résoudre au moins le même nombre d'étoile par degré² que le premier télescope astrométrique 1, et doit présenter sensiblement la même sensibilité radiométrique.

Le télescope spectrométrique 2 comprend en outre un second module optique 6 (ici matérialisé de façon très simplifiée par une lentille) chargé de collecter un troisième faisceau de lumière, issu d'étoiles situées, ici, dans le premier champ de vue, et se dirigeant sensiblement parallèlement à la troisième ligne de visée L3, et de délivrer ce troisième faisceau au niveau d'un second module de détection d'étoiles 7 installé au niveau d'au moins un second plan focal PF2 et alimentant en données représentatives de positions le module de traitement de données 3.

Ce télescope spectrométrique 2 est par exemple installé sur la partie inférieure du tore de support de la structure du satellite.

Les première L1 et seconde L2 lignes de visée définissent un angle α1 qui est préférentiellement égal à environ 106°.

Le module de traitement 3 est chargé de déterminer, à partir des données de position délivrées par les premier 5 et second 7 modules de détection, le champ de vue d'origine de chaque étoile détectée. Cette détermination est rendue particulièrement simple du fait que les première L1 et troisième L3 lignes de visée sont sensiblement parallèles. En effet, dans cette configuration, les premier et troisième faisceaux correspondent à des étoiles situées dans le premier champ de vue, tandis que le deuxième faisceau correspond à des étoiles situées dans le second champ de vue. Par conséquent, toute étoile détectée à la fois par les premier 5 et second 7 modules de détection est située dans le premier champ de vue, tandis que toute étoile détectée seulement par le premier module de détection 5 est située dans le second champ de vue.

Le module de traitement 3 peut donc être réalisé sous la forme d'un comparateur multivoies chargé de confronter entre elles les données délivrées par les premier 5 et second 7 modules de détection.

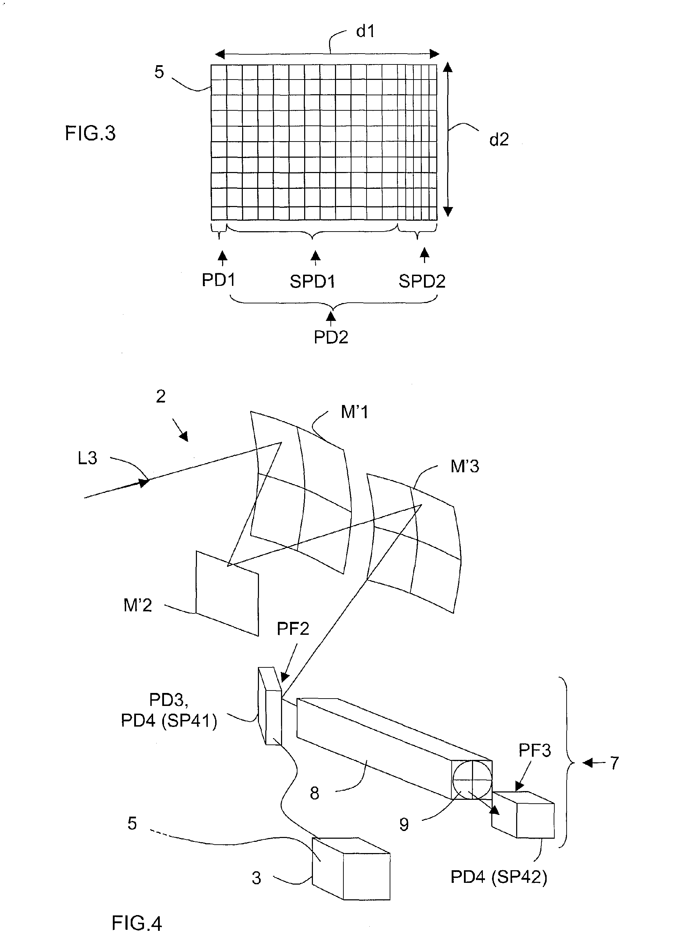

On se réfère maintenant plus particulièrement aux figures 2 et 3 pour décrire plus en détail un exemple de réalisation d'un premier télescope astrométrique 1 d'un dispositif selon l'invention.

Dans l'exemple illustré, le premier module optique 4 du télescope astrométrique 1 comprend des premier ME1 et second ME2 miroirs plans d'entrée chargés respectivement de réfléchir vers un premier miroir M1, dit de combinaison, les premier et second faisceaux. Les premier ME1 et second ME2 miroirs plans d'entrée présentent des normales N1 et N2 (matérialisées sur la figure 1) désorientées entre elles d'un angle α2 sensiblement égal à la moitié de l'angle α1 défini entre les première L1 et seconde L2 lignes de visée.

Préférentiellement, chaque miroir plan ME1 ou ME2 présente une surface sensiblement égale à la moitié de la surface de la pupille d'entrée du télescope astrométrique 1. Typiquement, la surface de la pupille d'entrée du télescope astrométrique 1 est égale à environ 1,4 m x 1 m.

Le premier miroir de combinaison M1 est par exemple un miroir concave chargé de combiner les premier et deuxième faisceaux vers un second miroir M2 convexe. Les premier et deuxième faisceaux sont alors réfléchis par le second miroir M2 vers un troisième miroir M3 concave, qui les fait converger vers le premier plan focal PF1 où se trouve implanté le premier module de détection 5. La combinaison optique, utilisée dans cet exemple de réalisation de télescope astrométrique 1, est appelée « Korsch ». Elle est plus précisément composée de trois miroirs (M1, M2, M3) asphériques hors d'axe (ou « off axis »).

Bien entendu, le premier module optique 4 peut être agencé différemment. La combinaison optique du télescope astrométrique doit en fait être optimisée en fonction des paramètres optiques requis par l'application (champ de vue, taille de la pupille d'entrée et distance focale). Typiquement, la distance focale du télescope astrométrique 1 est de quelques dizaines de mètres.

Le premier module optique 4 peut en variante comporter un miroir d'entrée constituant simultanément le miroir de combinaison. A cet effet, le miroir d'entrée peut être réalisé en deux portions de miroir concave présentant des normales désorientées chacune d'un angle α2 sensiblement égal à l'angle α1 défini entre les première L1 et seconde L2 lignes de visée.

Comme cela est illustré schématiquement sur la figure 3, le premier module de détection comprend de préférence une première PD1 et une seconde PD2 parties.

La première partie PD1 est dédiée à la détection des étoiles et alimente plus particulièrement le module de traitement 3 en données de position à partir desquelles il effectue ses comparaisons (ou confrontations). Cette première partie PD1 est par exemple réalisée sous la forme de ce que l'homme de l'art appelle un « sky mapper ». Elle est constituée d'une colonne d'éléments CCD (ici en nombre égal à 10).

La seconde partie PD2 est dédiée aux mesures astrométriques. Elle comprend de préférence une première sous-partie SPD1 dédiée aux mesures astrométriques et une seconde sous-partie SPD2 dédiée aux mesures photométriques en bande large (ou BBP pour « Broad Band Photometry »).

La première sous-partie SPD1 est préférentiellement constituée de onze colonnes d'éléments CCD (ici en nombre égal à 10), et la seconde sous-partie SPD2 est préférentiellement constituée de cinq colonnes d'éléments CCD (ici en nombre égal à 10).

Par exemple, chaque élément CCD est constitué de pixels présentant des dimensions de l'ordre de 10 µm x 30 µm. Par ailleurs, la matrice de CCD constituant les différentes parties du premier dispositif de détection 5 s'étend sur une surface d1 x d2, où d1 vaut par exemple environ 750 mm (ce qui correspond à environ 0,737°) et d2 vaut par exemple environ 600 mm (ce qui correspond à environ 0,92°).

La matrice CCD est balayée selon la loi de balayage choisie du satellite. Par exemple, la fréquence de balayage, égale à la fréquence de rotation du satellite, est d'environ 60 arcsec/seconde.

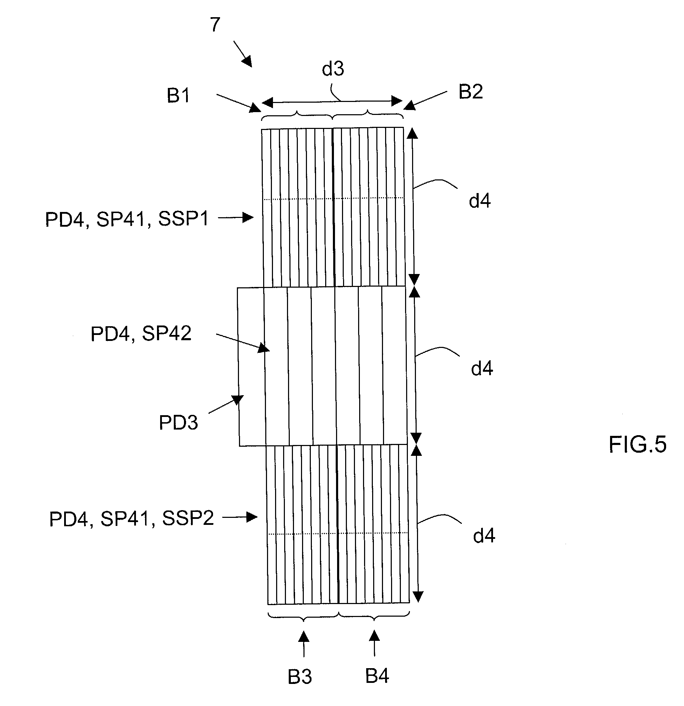

On se réfère maintenant plus particulièrement aux figures 4 et 5 pour décrire plus en détail un exemple de réalisation d'un second télescope 2 (ici de type spectrométrique) d'un dispositif selon l'invention.

Dans l'exemple illustré, le second module optique 6 du télescope spectrométrique 2 comprend, par exemple, une combinaison optique bien connue constituée de trois miroirs anastigmats M'1, M'2 et M'3. Le premier miroir M'1 est concave. Il est chargé de réfléchir le troisième faisceau (parallèle à la troisième ligne de visée L3) vers le deuxième miroir M'2, de préférence convexe, lui même chargé de réfléchir le troisième faisceau vers le troisième miroir M'3, de préférence concave. Enfin, le troisième miroir M'3 fait converger le troisième faisceau vers le second module de détection 6.

Conformément à l'invention, le second télescope 2 comprend un module de détection 7 capable de détecter des étoiles avec une résolution au moins égale à celle offerte par le premier module de détection 5 du télescope astrométrique 1, et avec sensiblement la même sensibilité radiométrique. Par conséquent, le second module de détection comporte au moins une matrice de détection, de préférence de type sky mapper. C'est la raison pour laquelle il n'est pas obligatoire que le second télescope 2 soit de type spectrométrique. Il peut en effet s'agir d'un simple télescope équipé d'un dispositif de détection d'étoiles, par exemple de type sky mapper.

Dans le cas d'un second télescope 2, de type spectrométrique, le second module de détection 7 comprend une première partie PD3, implantée dans le second plan focal PF2 du télescope spectrométrique 2 et dédiée à la détection des étoiles, et une seconde partie PD4 dédiée aux mesures spectrométriques.

La première partie de détection PD3 est, comme indiqué ci-dessus, préférentiellement réalisée sous la forme d'un « sky mapper » dont le champ de vue est au moins égal à celui du sky mapper PD1 du premier module de détection 5 et capable de détecter des étoiles de même magnitude et de résoudre au moins la même quantité d'étoiles que le sky mapper PD1 du premier module de détection 5. Elle est constituée d'au moins une colonne de détection constituée de préférence d'éléments CCD qui alimentent plus particulièrement le module de traitement 3 en données de position à partir desquelles il effectue ses comparaisons (ou confrontations). Par exemple, la colonne comporte 10 éléments CCD, chacun comportant une multiplicité de pixels.

Typiquement les sky mappers utilisés sont capables de détecter des étoiles de magnitude 20 et de résoudre 25000 étoiles/degré²; et le champ de vue du sky mapper du second module de détection 7 s'étend préférentiellement, suivant une direction perpendiculaire à la direction du balayage, sur une distance angulaire (par exemple égale à 1,6°) supérieure à celle du sky mapper du premier module de détection 5 (par exemple égale à 0,737°).

Comme cela est illustré sur la figure 5, la seconde partie PD4 est constituée de deux sous-parties SP41 et SP42.

La première sous-partie SP41 est par exemple dédiée à la photométrie en bande moyenne (ou MBP pour « Medium Band Photometry »). Elle est implantée, comme le sky mapper PD3, au niveau du second plan focal PF2. Par ailleurs, elle comporte préférentiellement une première SSP1 et une seconde SSP2 portions sensiblement identiques, séparées spatialement l'une de l'autre et constituées, ici, d'un bloc B1 (ou B3) de 8 barrettes de détection renforcées dans le rouge et d'un bloc B2 (ou B4) de 8 barrettes de détection renforcées dans le bleu. Chaque barrette de bloc Bi est préférentiellement constituée d'éléments CCD. Par exemple, chaque élément CCD est constitué d'une multiplicité de pixels présentant des dimensions de l'ordre de 10 µm x 15 µm. Par ailleurs, la matrice de CCD constituant chaque portion SSP1 ou SSP2 s'étend sur une surface d3 x d4, où d3 vaut de préférence environ 74 mm (ce qui correspond à environ 2°) et d4 vaut de préférence environ 60 mm (ce qui correspond à environ 1,6°).

La seconde sous-partie SP42 est implantée au niveau d'un troisième plan focal PF3 du second télescope spectrométrique 2, situé en aval de la première partie PD3 et d'un groupe de mise en forme optique 8 constitué d'éléments optiques 9 définissant un collimateur/disperseur/imageur travaillant selon une magnification unitaire.

Cette seconde sous-partie SP42 est, par exemple, dédiée aux mesures spectrométriques de vitesse radiale (ou RVS pour « Radial Velocity Spectrometer »). Elle comprend de préférence un bloc de 6 barrettes de détection chargées de détecter des photons, par exemple dans l'intervalle [849 nm - 874 nm]. Chaque barrette du bloc est préférentiellement constituée d'éléments CCD. Par exemple, chaque élément CCD est constitué d'une multiplicité de pixels présentant des dimensions de l'ordre de 10 µm x 15 µm. Par ailleurs, la matrice de CCD constituant cette sous-partie SP42 s'étend sur une surface d3 x d4, où d3 vaut de préférence environ 74 mm (ce qui correspond à environ 2°) et d4 vaut de préférence environ 60 mm (ce qui correspond à environ 1,6°).

Les éléments de détection CCD du second module de détection 7 sont balayés selon la loi de balayage choisie du satellite. Par exemple, comme indiqué ci-avant, la fréquence de balayage est de 60 arcsec/seconde.

Les mesures astrométriques et spectrométriques effectuées par les premier 5 et second 7 modules de détection sont tout à fait classiques, et ne seront donc pas décrites ici. Ce qui est important, c'est le fait que les comparaisons effectuées par le module de traitement 3, à partir des données de position délivrées par les sky mappers PD1 et PD3 des premier 5 et second 7 modules de détection, permettent de discriminer efficacement les étoiles détectées dans les premier et second champs de vue, et par conséquent permettent auxdits premier 5 et second 7 modules de mesurer les positions réelles des étoiles et leurs caractéristiques doppler par confrontation de leurs positions au sein de leurs champs de vue respectifs. En d'autres termes, une fois que le module de traitement 3 a déterminé le champ de vue auquel appartient une étoile, il le signale au premier module de détection 5 qui peut alors mesurer précisément sa position par confrontation entre ses positions au sein des premiers et second champs de vue.

Grâce à l'invention, il est possible de relâcher les contraintes de stabilité dimensionnelle des composants optiques du télescope astrométrique et par conséquent de limiter l'exigence de stabilité imposée aux deux miroirs plans d'entrée. En outre, l'invention permet de supprimer l'un des deux télescopes astrométriques utilisés dans l'une des techniques antérieures, à condition que la dimension de la pupille d'entrée du télescope astrométrique soit égale au double de celle de chaque télescope astrométrique utilisé dans cette technique antérieure. Par ailleurs, l'invention permet d'effectuer des mesures de position d'une grande précision sans qu'il faille recourir à un catalogue d'étoiles préexistant, comme c'est le cas d'une autre technique antérieure.

L'invention ne se limite pas aux modes de réalisation de dispositif de mesures astrométriques et de satellite décrits ci-avant, seulement à titre d'exemple, mais elle englobe toutes les variantes que pourra envisager l'homme de l'art dans le cadre des revendications ci-après.

## Revendications

1. Dispositif de mesures astrométriques comprenant un premier télescope astrométrique (1) comportant une première (L1) et une seconde (L2) lignes de visée correspondant respectivement à des premier et second champs de vue et des premiers moyens optiques (4) agencés pour combiner des premier et second faisceaux de lumière, issus d'étoiles situées dans lesdits premier et second champs de vue et sensiblement parallèles auxdites première (L1) et seconde (L2) lignes de visée, et les délivrer au niveau d'un premier dispositif de détection d'étoiles (5) installé au niveau d'un premier plan focal (PF1), **caractérisé en ce qu'**il comprend en outre i) un second télescope (2) comportant une troisième ligne de visée (L3) sensiblement parallèle à l'une desdites première (L1) et seconde (L2) lignes de visée et des second moyens optiques (6) agencés pour collecter un troisième faisceau de lumière issu desdites étoiles et sensiblement parallèle à ladite troisième ligne de visée (L3) et le délivrer au niveau d'un second dispositif de détection d'étoiles (7) installé au niveau d'au moins un second plan focal (PF2,PF3), et ii) des moyens de traitement (3) agencés pour déterminer le champ de vue d'origine de chaque étoile détectée en fonction de sa détection soit seulement par ledit premier dispositif de détection (5), soit conjointement par lesdits premier (5) et second (7) dispositifs de détection.

2. Dispositif selon la revendication 1, **caractérisé en ce que** lesdits premiers moyens optiques (4) comprennent un miroir de combinaison (M1) et deux miroirs plans d'entrée (ME1,ME2), présentant des normales (N1,N2) désorientées entre elles d'un premier angle (α2) sensiblement égal à la moitié d'un second angle (α1) défini entre lesdites première (L1) et seconde (L2) lignes de visée et propres à recevoir respectivement lesdits premier et second faisceaux de lumière et à les réfléchir vers ledit miroir de combinaison (M1).

3. Dispositif selon la revendication 1, **caractérisé en ce que** lesdits premiers moyens optiques (4) comprennent un miroir concave d'entrée comportant des première et seconde portions présentant des normales désorientées chacune d'un premier angle (α2), sensiblement égal à un second angle (α1) défini entre lesdites première (L1) et seconde (L2) lignes de visée, et propres à recevoir respectivement lesdits premiers et second faisceaux de lumière et à les combiner.

4. Dispositif selon l'une des revendications 2 et 3, **caractérisé en ce que** chaque miroir plan (ME1,ME2) ou portion de miroir concave présente une surface sensiblement égale à une moitié de surface d'une pupille d'entrée dudit télescope astrométrique (1).

5. Dispositif selon l'une des revendications 2 à 4, **caractérisé en ce que** ledit second angle (α1) est égal à environ 106°.

6. Dispositif selon l'une des revendications 1 à 5, **caractérisé en ce que** ledit premier dispositif de détection (5) comprend une première partie (PD1), dédiée à la détection d'étoiles et couplée auxdits moyens de traitement (3), et une seconde partie (PD2) dédiée au moins aux mesures astrométriques.

7. Dispositif selon la revendication 6, **caractérisé en ce que** ladite seconde partie (PD2) comprend une première sous-partie (SPD1) dédiée aux mesures astrométriques et une seconde sous-partie (SPD2) dédiée aux mesures photométriques en bande large.

8. Dispositif selon l'une des revendications 1 à 7, **caractérisé en ce que** ledit second télescope (2) est de type spectrométrique, et **en ce que** ledit second dispositif de détection (7) comprend une première partie (PD3), dédiée à la détection d'étoiles et couplée auxdits moyens de traitement (3), et une seconde partie (PD4) dédiée aux mesures spectrométriques.

9. Dispositif selon la revendication 8, **caractérisé en ce que** ladite seconde partie (PD4) comprend une première sous-partie (SP41 ) dédiée aux mesures photométriques en bande moyenne et une seconde sous-partie (SP42) dédiée aux mesures spectrométriques de vitesse radiale.

10. Dispositif selon l'une des revendications 6 à 9, **caractérisé en ce que** lesdites première (PD1,PD3) et seconde (PD2,PD4) parties sont constituées de détecteurs à couplage de charge (CCD).

11. Satellite d'observation, **caractérisé en ce qu'**il comprend un dispositif de mesures selon l'une des revendications précédentes.

12. Satellite selon la revendication 11, **caractérisé en ce qu'**il est agencé pour tourner sur lui-même de sorte que lesdits premier (1) et second (2) dispositifs de détection soient balayés selon une loi de balayage choisie.
